Europäisches Patentamt

European Patent Office

Office européen des brevets

(19)

(11) **EP 1 167 095 A1**

(12) **EUROPEAN PATENT APPLICATION**

| | |
|---|---|
| (43) Date of publication:<br>**02.01.2002 Bulletin 2002/01** | (51) Int Cl.7: **B60G 17/04**, F16F 15/027,<br>A01M 7/00 |

(21) Application number: **00202215.0**

(22) Date of filing: **26.06.2000**

| | |
|---|---|
| (84) Designated Contracting States:<br>**AT BE CH CY DE DK ES FI FR GB GR IE IT LI LU MC NL PT SE**<br>Designated Extension States:<br>**AL LT LV MK RO SI** | (72) Inventors:<br>• **Anthonis, Jan**<br>  **3050 Oud-Heverlee (BE)**<br>• **Ramon, Herman**<br>  **9031 Drongen-Luchteren (BE)** |
| (71) Applicant: **K.U. Leuven Research & Development**<br>**3000 Leuven (BE)** | (74) Representative: **Bird, William Edward et al**<br>**Bird Goen & Co., Termerestraat 1**<br>**3020 Winksele (BE)** |

(54) **Method and device for controlling and stabilising movement**

(57)     The present invention relates to a method and a stabilisation device for controlling and stabilising of a movement of a movable member suspended from a frame. The device comprises a force actuator attached to an elastic damping device. The combination of the force actuator, the elastic damping device and the suspended elongate member has a higher fundamental resonant frequency than the suspended elongate member alone.

Fig. 4

## Description

### Technical field of the invention

The present invention relates to controlling and stabilising, with respect to a desired path, of a movement along an actual path of a movable member suspended on a frame. The movable member may be a spray boom suspended from a frame on or connected to a tractor or another vehicle, as used for sprayers in agricultural applications, for spraying crops for example. It may also be a spray boom for spraying paint or varnish on a surface to be sprayed, which spray boom is then also suspended from a frame.

### Background of the invention

Sprayers used in farming for spraying crops, have wide spray booms, in operating position, which extended outwardly transverse to the direction of travel of a vehicle adapted for moving the spray boom. The width of the sprayer may be as wide as 30 metres or more.

The tendency towards the use of low volume spraying techniques, leading to a necessary reduction in spray droplet size, the cost of chemicals and increasing concern with environmental pollution demand more sophisticated spraying-machines which are able to spray the liquid as uniformly as possible.

Irregularities in the spray deposition patterns may be created by malfunctioning of the hydraulic equipment e.g. owing to pressure variations, obstructed or badly worn nozzles, by a varying driving speed of the tractor, by gusts of wind and, last but not least, by undesired spray boom motions, such as unwanted rolling, pitching and yawing of the boom, transmitted from the vehicle, and excessive horizontal flexible deformations of the spray boom induced by tractor vibrations and accelerations. Owing to horizontal boom vibrations, nozzles move at a varying speed across the field which also adversely affects the spray deposition pattern. Higher vehicle speeds, made possible by the use of more powerful agricultural machines, can magnify vibrations, caused by soil irregularities, on tractor and implement.

Vertical flexible deformations of the spray boom are strongly attenuated by the frame structure of the boom. It is known to use a passive suspension system which stabilises the boom against displacement from the desired position when the vehicle moves over uneven ground.

Such a spray boom, which can be very long, is generally suspended for free rotation about an axis passing above its centre of gravity to create a force to return it to position like a pendulum. Under the influence of unevenness of the ground, variations of transverse slope and external forces such as, for example, the wind, tends not to remain parallel to the ground (or the crops to be sprayed) and can oscillate, which tends to cause its end to strike the ground and which, in any case, disrupts the regularity of spraying.

EP-0 157 592 describes a boom suspension including a passive and an active suspension arrangement. The passive suspension arrangement maintains the boom in a set relation to the vehicle and stabilises the boom against displacement from a desired position when the vehicle moves over uneven ground. The active suspension arrangement comprises means to force an alteration of a dimension of the passive suspension and in that way corrects by displacement of the whole boom and suspension. This is necessary when the boom is in the wrong attitude with respect to the ground surface when, for example, the boom tilts on its own suspension or the ground is sloping. The means to force the alteration produce a final boom position which is altered from the stabilised suspended position. Control means to control the means to force the alteration in the said dimension provide a continuous correction of the displacement more slowly than the stabilisation action of the passive suspension of the whole boom and suspension. This control means include a distance sensor to measure the distance of the boom from the ground, means responsive to this measurement to determine the alteration in the dimension to correct the distance of the boom from the ground, and means responsive to this determination to alter the dimension to continuously correct the distance of the boom from the ground. One problem with this known device is that the fundamental frequency of the boom is low. This means that it reacts very slowly to any attempt to change its inclination to the ground. This slow reaction makes it difficult for the driver of the tractor to estimate exactly how far the boom must be moved - for example changing direction when traversing a sloping field requires that the slope of the boom must be changed as the tractor turns the corner to traverse the slope in the reverse direction. To avoid over-or undershoot, the driver must wait for stabilisation after each adjustment of the boom.

It is known from US-4,522,841 to movably mount a spray boom on a support point such that it is mounted for free rotation about a longitudinal axis carried by a support chassis. At least one detector adapted to measure the distance the spray boom is spaced from the surface to be sprayed, is mounted on the spray boom. The measurements of the detector or detectors are sent to a programmed computer which effects comparison of the measured values to theoretical values corresponding to parallelism of the spray boom with the surface to be sprayed. It emits a control signal as a function of the result of this comparison. Means responsive to said control signal actuate a double-acting jack articulated on the spray boom and on the carrying chassis, which jack is provided with a source of fluid under pressure to cause the spray boom to turn about the longitudinal axis carried by the support chassis. The device described permits to more or less maintain the spray boom parallel to the ground or to the cultivated surface to be sprayed. However, due to the direct and immediate influence of the pressure supplied to the jack, the boom will flex and overshoot, thus generating a control signal actuating the jack in the other direction. This generates an oscillation of the boom which prevents the boom from quickly changing position, e.g. from tilting right side up to tilting left side up, which problem may occur when the vehicle carrying the boom on a sloping field is turned at the end of a field to begin spraying a next row in the other direction. Due to the oscillation of the boom, it is very likely that the extremities of the boom will hit the ground if the vehicle does not turn slow enough.

In all known attempts for the problem mentioned above, it is difficult to keep the spray boom parallel to the ground (and thus to the crops to be sprayed) at all times. The boom can oscillate, under the influence of variations in the transverse slope and external forces such as, for example, the wind. This tends to cause its ends to strike the ground and, in any case, disrupts the regularity of spraying.

**Summary of the invention**

It is an object of the present invention to provide a method and a device which has a better control of one or more movements in one or more directions of a long elongate member suspended substantially horizontally from a frame.

In one aspect of the present invention, the fundamental resonant frequency of a suspended elongate movable member (e.g. a spray boom) is increased while providing damping of the movement of the movable member. The damping may be sub-critical or critical damping in order to prevent the movable member from oscillating.

The present invention may provide a stabilisation device between an elongate suspended movable member and a suspension frame from which the movable member is suspended. This stabilisation device acts as a stiff, optionally damped spring in series with an actuator. The stabilisation device controls and stabilises the elongate member in a movement towards a given position of the member with respect to a reference plane.

The present invention may provide: a stabilisation device for changing the position of a suspended elongate movable member suspended from a suspension device, said stabilisation device comprising:

a force actuator mounted between the elongate movable member and the suspension device, and adapted for exerting a force on the elongate movable member for modifying its position, the force actuator comprising a damped spring device in series with a movement actuator. The force actuator preferably comprises a cylinder with a piston, and a first accumulator connected fluidly and directly with the cylinder to provide fluid damping of the movements of the piston in the cylinder.

The stabilisation device according to an embodiment of the present invention may comprise:

- at least one measurement means (e.g. a distance sensor) for measuring the instantaneous inclination of the elongate movable member with respect to a physical reference plane independent of and external to the device,
- a comparator which receives the values measured by the measurement means and compares them to a desired value corresponding to a desired inclination of the elongate movable member, and emits a signal which is a function of the result of this comparison,
- force exerting means mounted between the elongate movable member and the frame, and adapted for exerting a force on the movable member for modifying its inclination, said force exerting means comprising a fluidly activated cylinder with a piston, and at least a first fluid buffer accumulator, the buffer accumulator being fluidly connected with the cylinder, and
- actuating means (e.g. a proportional valve) responsive to the signal emitted by the comparator to actuate, as a function of said signal, the force exerting means.

The force exerting means may push and/or pull the elongate member so that it rotates about a horizontal axis (vertical actuation movement) or about any other axis, e.g. about a vertical axis (horizontal actuation movement) so as to restrict and control horizontal rotations which have a markedly negative effect upon the spray density on the ground.

The stabilisation device may furthermore comprise a second or more fluid buffer accumulators whereby the first buffer is connected to one end of the cylinder and the second buffer is connected to the other end of the cylinder. Further, a fluid restriction such as a throttle valve may be placed between the first and/or second accumulators and the cylinder.

A process of stabilisation of an elongate movable member suspended on a frame is also provided. The process is characterised in that there is exerted between the elongate movable member and the frame a displacing force for actively changing the position of the elongate movable member with respect to an independent and external reference plane, as well as passively damping the movement of the movable member, such that the fundamental resonant frequency of the movable member is increased compared to its unstabilised fundamental resonant frequency.

By using the method or device of the present invention, the elongate movable member will move smoothly quicker to its final position. Depending on the type of damping used, the elongate member will move quicker to its final position without overshoot and with almost no oscillation.

Other features and advantages of the present invention will become apparent from the following detailed description, taken in conjunction with the accompanying drawings, which illustrate, by way of example, the principles of the invention.

**Brief description of the drawings**

Fig. 1 is a diagrammatic illustration of a spray boom suspended to a frame, and provided with a hydraulic or pneumatic cylinder, articulated on the spray boom and on the frame, for controlling and stabilising the movement of the spray boom.

Fig. 2 is a view showing in more detail the working principle of the hydraulic or pneumatic cylinder of Fig. 1.

Fig. 3 is a block diagram illustrating in still more detail the working principle of the hydraulic or pneumatic cylinder of Figs. 1 and 2.

Fig. 4 is a schematic diagram of an embodiment of a stabilisation device according to the present invention.

Figs. 5 and 6 show response of a suspension while travelling across a field in accordance with an embodiment of the present invention to a sudden change in the inclination of the boom. Fig. 5 is without a frictional restriction between accumulators and cylinder and Fig. 6 is with a restriction.

Fig. 7 is a schematic diagram of another embodiment of a stabilisation device according to the present invention.

Fig. 8 is a schematic representation of a force actuator in accordance with an embodiment of the present invention.

**Description of the illustrative embodiments**

The invention will be explained hereinafter with respect to certain embodiments and drawings but the present invention is not limited thereto but only by the claims. The present invention will mainly be described with reference to agricultural spray booms, but the present invention may be applied to any suspended boom system, e.g. spraying of paints or other liquids. Also, mainly hydraulic systems will be described, but the present invention includes any similar drive mechanisms or combinations of such systems such as electrical or mechanical drives, with mechanical springs and hydraulic dampers.

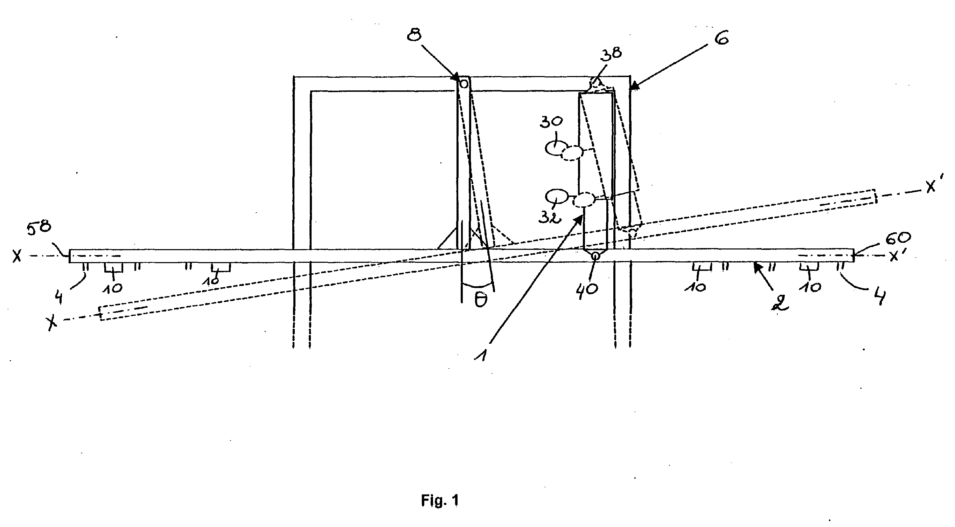

Fig. 1 shows, in schematic form, a spray boom 2, carrying a plurality of spray nozzles 4. The spray boom 2 is suspended from a frame 6 and journalled about a suspension joint 8 around which the spray boom 2 can rotate thus changing its inclination to a reference plane, e.g. horizontal. In operation, the frame 6 itself is connected to a vehicle (not represented) such as a tractor or another carrying chassis on wheels. Suspension from the suspension joint 8 of an elongate member such as a spray boom 2 provides a passive suspension for the spray boom 2. This passive suspension stabilises the spray boom 2 against displacements from the desired position when the carrying chassis moves over uneven or bumpy ground. Rapid oscillations induced by the vehicle roll frequencies and/or lateral motions are filtered out because the boom 2 moves too slowly to follow rapid movements. A long spray boom has a high angular moment of inertia and only changes its inclination slowly. The position of the spray boom 2 in its active or operating position with regard to the carrying chassis is such that the spray boom 2 extends laterally from the carrying chassis, preferably at both sides, the axis X-X' of the spray boom 2 being substantially perpendicular to the direction of movement of the carrying chassis.

A tank (not represented) is provided to hold spray chemicals, which spray chemicals are fed to the spray nozzles 4 of the spray boom 2 by means of a system of conduits (not represented) connected to the tank. The system of conduits may for example be tubes of metallic or plastic material, and in any way must be composed of a material which is compatible with the nature of the spray chemicals used. The spray chemicals are sprayed under pressure through the spray nozzles 4 by means of a pump onto a surface to be treated.

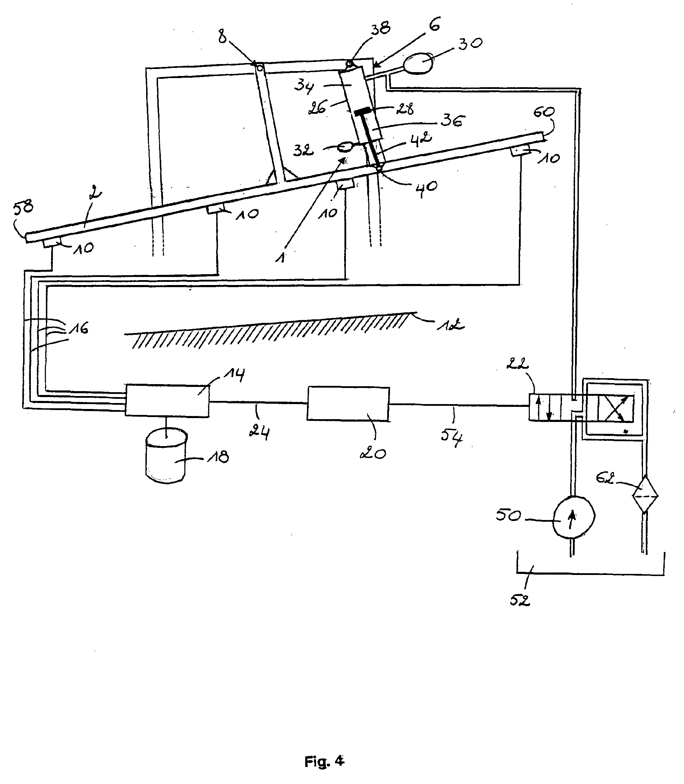

According to an embodiment of the present invention there are mounted along the spray boom 2 at least one distance sensor 10 adapted to measure the distance separating the distance sensor 10 from a physical reference 12, which may be the surface to be sprayed, or the crops themselves. The distance sensors 10 may be for example ultrasonic emitter-receiver groups. The measurement results obtained from the distance sensors 10 are transmitted to a computing device 14, for example a computer by suitable transmission means, for example cables 16, as represented in Fig. 4. The present invention is not limited to cable transmission but includes any suitable means such as at radio frequencies. The distance sensors may be part of a local area network such as a CAN. The computing device 14 is programmed or adapted to compare the distance values measured by the distance sensors 10 with desired distance values stored in a memory 18. As a function of the result of this comparison, the programmed computing device 14 determines a difference or error signal between the desired and actual inclination. From the error signal the computing device 14 determines how the spray boom 2 has to be moved (direction) in order to keep it at a desired distance above a physical reference 12, for example the ground. The result, in the form of a control signal, is transmitted from the computing device 14 to control means 20 for controlling a proportional valve 22, for example by a cable 24. The control means 20 and the proportional valve 22 may be linked to each other in any other known way.

The force to move the spray boom 2 is provided by fluid actuator 1, which may act also as a damped spring. The fluid actuator 1 may include a pneumatic or hydraulic cylinder 26 and a piston 28 sealingly displaceable in the cylinder. In addition at least one accumulator 30, 32 is fluidly connected to the cylinder 26. Preferably, a first and a second accumulator 30, 32 are fluidly connected to the cylinder 26, one accumulator being connected to each end of the cylinder 26. The piston 28, by its position inside the cylinder 26, divides said cylinder 26 in a first cylinder chamber 34 and a second cylinder chamber 36, the volume of the first and second chambers 34, 36 change with changing position of the piston 28 inside the cylinder 26. The cylinder 26 and the first and second accumulators 30, 32 are filled with a fluid (a gas, e.g. nitrogen if it is a pneumatic system, or a fluid, e.g. oil, if it is a hydraulic system). The pneumatic or hydraulic actuator 1 is rotatably connected to both the spray boom 2 and the frame 6. The cylinder 26 may for example be rotatably connected to the frame 6 by a first joint 38, and the piston 28 may be rotatably connected to the spray boom 2 by a second joint 40, as represented in Figs. 1 and 4. First and second joints 38, 40 may be spaced laterally from the suspension joint 8 of the spray boom 2 to the frame 6 with reference to the axis X-X' of the spray boom 2. The connections of cylinder 26 and piston 28 to frame 6 and spray boom 2 may also be carried out in an inverse manner (cylinder 26 to spray boom 2 and piston 28 to frame 6), or it may be done by means of intermediate connecting parts. By way of example the embodiment described hereinafter has the cylinder 26 connected to the frame 6 and the piston 28 connected to the spray boom 2 by means of a piston rod 42.

When the spray boom 2 is positioned over its entire length (according to the X-X'-axis) at a correct distance from the physical reference 12, the computing device 14 sends no actuation signal to the fluid actuator 1. The cylinder 26 and piston 28 are in a rest position. Pressures p1 and p2 are present at each side of the piston 28 inside the cylinder 26. In this rest position, the force equation is as follows:

$$F + p1\ \Omega1 = p2\ \Omega2 \tag{1}$$

whereby:

F: force exerted by the spray boom on the piston rod
p1: pressure on the left side of the piston
p2: pressure on the right side of the piston
$\Omega1$: piston area
$\Omega2$: piston area minus piston rod area

If there are at least two distance sensors 10 located on the spray boom 2, and these detect that there is a correct inclination of the spray boom 2 with reference to the physical reference 12, but that the height of the spray boom 2 above the physical reference is outside tolerance, the whole spray boom 2 has to be moved up or down. This is effected by changing the height of the frame 6.

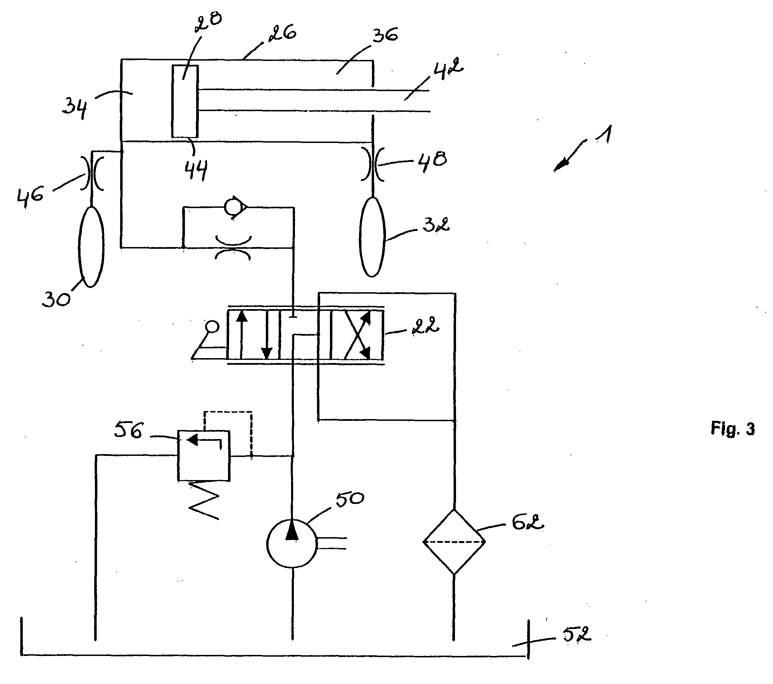

The cylinder 26 is fluidly connected to a first and a second accumulator 30, 32, each connected to the cylinder 26 on either side of the piston 28, preferably over a throttle valve 46, 48 or another calibrated restriction and placed and maintained under pressure in any known manner. The first cylinder chamber 34 is connected to a pump 50 via a proportional valve 22, as can be seen in Fig. 3. The pump 50 pumps fluid from a tank 52 towards the proportional valve 22. This proportional valve 22 is a three-position valve connected to a control means 20 controlled by signals coming from the computing device 14 and, for example, transmitted by cable 54 or in any other manner. The neutral position of the proportional valve 22 ensures that no pressure is lost from the pneumatic or hydraulic damped spring 1. This is the rest position of the damped spring 1.

Preferably a safety valve 56 is applied between the pump 50 and the proportional valve 22, which safety valve 56 feeds fluid back towards the tank 52 in case of an over-pressure generated by the pump 50 in the proportional valve 22, in the cylinder chambers 34, 36 or in the accumulator 30.

If the distance sensors 10 indicate that the spray boom 2 is at a wrong inclination compared to the physical reference, e.g. the surface to be sprayed, the fluid actuator 1 is activated to change this inclination. The spray boom 2 has to turn over an angle θ, which is the angle between the present inclination of the spray boom 2 and the new target inclination. For example, as represented in Fig. 1, the spray boom 2 was previously in a horizontal rest position as represented by the full lines, and has to turn through an angle θ towards the position as represented in dotted lines. To change the inclination of the boom 2, fluid pressure is increased or decreased in the chamber 34 may opening a valve 22 and connecting the chamber 34 either to the pump 50 or to drain 52. The effect of this will be to transfer fluid either to or from accumulator 30. This results in a resultant force on piston 28.

The equation of motion of the piston 28 in the cylinder 26 is given by the following formula:

$$F + p1\,\Omega1 - p2\,\Omega2 = -m_z\,d_c\,\theta'' - c_z\,d_c\,\theta' \tag{2}$$

whereby:

$m_z$: the mass of the piston + piston rod
$c_z$: damping of the piston
$\theta$: angle between the pendulum of the spray boom and gravity
$\theta'$: first derivative of $\theta$
$\theta''$: second derivative of $\theta$
$d_c$: proportional factor between $\theta$ and the piston rod displacement

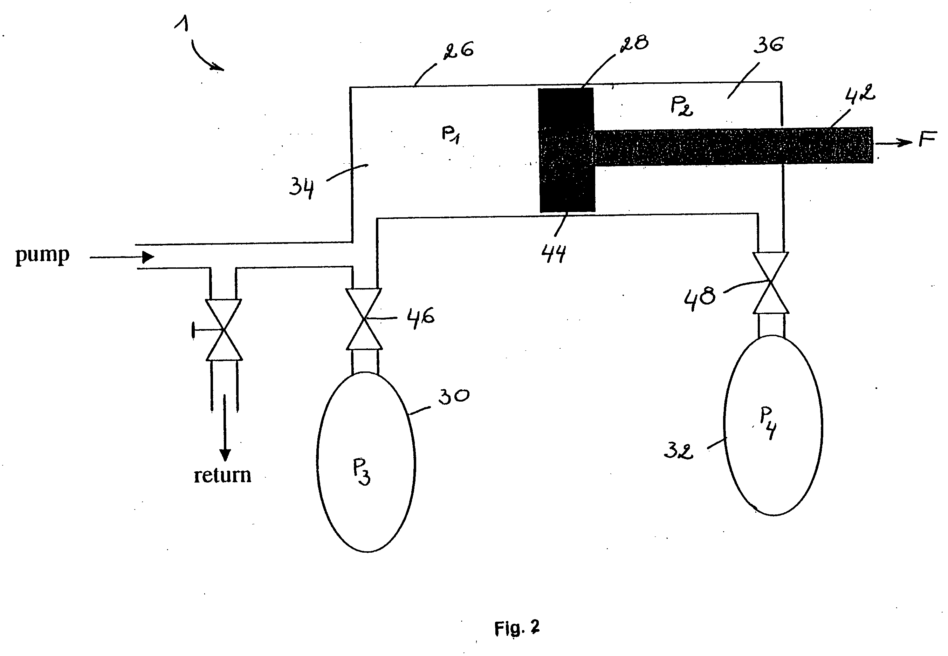

If the spray boom 2 has to move over an angle such that its left extremity 58 tilts up (the right extremity 60 going down at the same time) the piston 28 has to move to the right in the illustrations of Figs. 2 and 3. The proportional valve 22 is actuated by its control means 20 via control signals emitted as a function of the computation by the computing device 14, and is moved into the left position. A fluid pressure from pump 50 is applied to the first accumulator 30 and chamber 34. The fluid inside of the accumulator 30 will be compressed and the pressure on the piston 28 will increase in order to move it to the right. This force on piston 28 in the cylinder 26 applies a force to the spray boom 2 to make it tilt.

The rate of flow of fluid to the left side (first cylinder chamber 34) of the cylinder 26 as represented in Figs. 2 and 3, is represented by

$$Q = -d_c\,\theta'\,\Omega1 + Qa1 \tag{3}$$

whereby:

Q: flow rate delivered by the pump
Qa1: flow rate to the first accumulator

The rate of flow to the first accumulator 30 is given by

$$Q_{a1} = \text{sign}(p_1 - p_3)0.611\Omega_3\sqrt{\frac{2|p_1-p_3|}{\rho}} \tag{4}$$

whereby:

p3: pressure in the first accumulator
$\Omega3$: area of the restriction to the first accumulator
$\rho$: density of the fluid, e.g. of the nitrogen or of the oil

The first accumulator 30 behaves as represented by the following equation:

$$p3\,V_3^{K} = cte1 \tag{5}$$

whereby:

$V_3$: volume of the fluid in the accumulator
cte1: physical constant
$\kappa$: 1.4 for adiabatic compression (= compression without exchange of heat)

On the other hand, if the spray boom 2 has to move over an angle $\theta$ as represented in Fig. 1, control signals, emitted as a function of the computation by the computing device 14 move, by the control means 20, the proportional valve 22 into the right position, whereby pressure is released from the first accumulator 30 by releasing fluid from said first accumulator 30 towards a tank 52. Preferably, the fluid fed back to the tank 52 is fed through a filter 62.

The flow of fluid to the right side of the cylinder 26 (second cylinder chamber 36) as represented in Figs. 2 and 3, is represented by

$$- d_c \; \theta' \; \Omega 2 = Qa2 \tag{6}$$

whereby: Qa2: flow rate to the second accumulator

The flow to the second accumulator 32 is given by

$$Q_{a2} = \text{sign}(p_2 - p_4) 0.611 \Omega_4 \sqrt{\frac{2 |p_2 - p_4|}{\rho}} \tag{7}$$

whereby:

p4: pressure in the second accumulator
$\Omega 4$: area of the restriction to the second accumulator

The second accumulator 32 behaves as represented by the following equation:

$$p4 \; V_4^K = cte2 \tag{8}$$

whereby:

$V_4$: volume of the fluid in the accumulator
cte2: physical constant

The evolution of the volume $V_3$ of fluid in the first accumulator 30 and of the volume $V_4$ of fluid in the second accumulator 32 is given by

$$V_3 = V_{30} - \int_0^t Q_{a1} \; dt$$

$$V_4 = V_{40} - \int_0^t Q_{a2} \; dt$$

$$\tag{9}$$

whereby:

$V_{30}$: initial fluid volume in the first accumulator
$V_{40}$: initial fluid volume in the second accumulator
t: time

The following linearised equation describes the behaviour of the pendulum spray boom combination according to the present invention:

$$(I_b + m_b \, q_y^2) \, \theta'' - m_b \, g \, q_y \, \theta = d_c \, F + m_b \, q_y \, x'' \qquad (10)$$

whereby:

$I_b$: moment of inertia of the spray boom around its centre of gravity
$m_b$: mass of the boom
$q_y$: length of the pendulum
g: gravity acceleration (9.81 m/s$^2$)
x": horizontal accelerations transmitted from the carrying chassis to the spray boom

The fundamental frequency of the boom system is given by (Hz):

$$\frac{1}{2\pi} \sqrt{\frac{2dc^2\Omega_1^2 \kappa p_{30} - m_b g q_y V_{30}}{V_{30}(I_b + m_b q_y^2 + m_z d_c^2)}} \qquad (11)$$

In accordance with the above embodiment a spring-like action is achieved by the fluid oscillating between the first and second accumulators 30, 32 and the first and second cylinder chambers 34, 36. The damping of this spring action is carried out by forcing the fluid from the cylinder 26 through the restrictions 46, 48. By adjusting the fluid resistance of the restrictions 46, 48 the nature of the damping can be altered, e.g. to critical or sub-critical damping. Slight sub-critical damping is preferred.

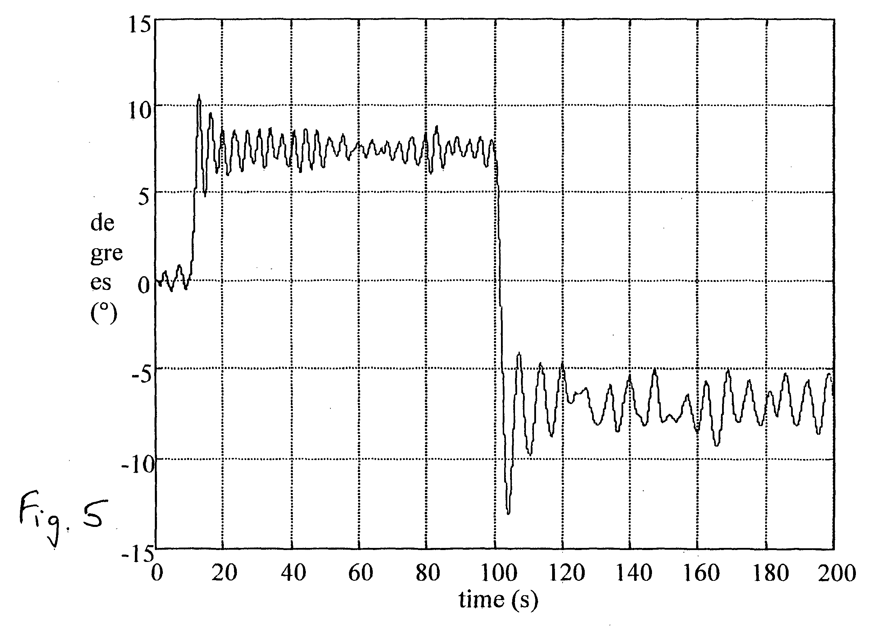

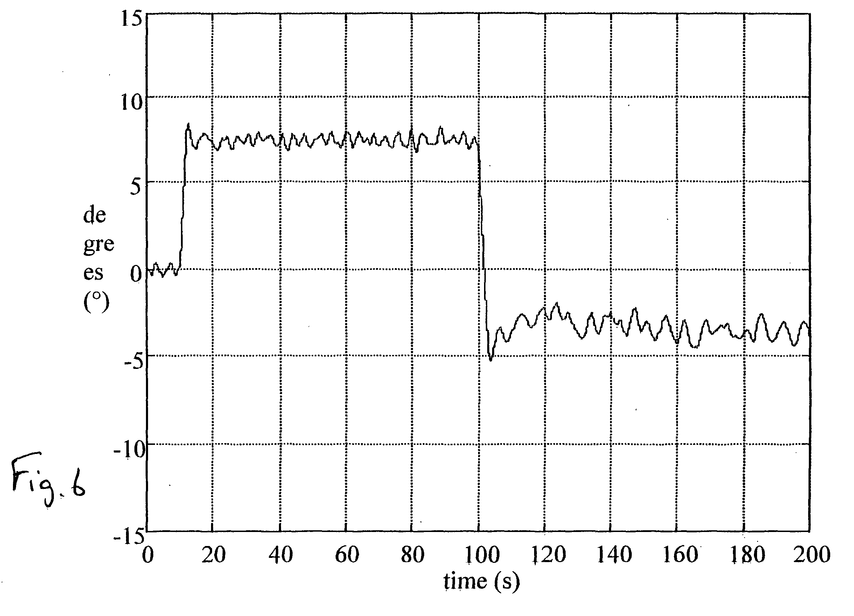

Typical response curves of a boom suspension system in accordance with the embodiment shown in Figs. 1 and 4 are shown in Figs 5 and 6. The curve in Fig. 5 shows the response of the boom suspension system (in change of inclination in degrees, Y axis) to a sudden change in inclination (X-axis, time in seconds) while the boom is travelling over a field. No restrictions 46, 48 were provided between the cylinder and the accumulators. As might be expected there is noticeable oscillation. Fig. 6 shows the same experiment performed with restrictions 46, 48 being provided. In this case, the oscillations are much reduced but the whole system is not quite critically damped. It is slightly under-damped. The suspension system is, however, much more controllable.

From these curves it can be seen that the fluid actuator 1 acts as both a damped spring for oscillatory movement as well as a force actuator for changing the inclination of the boom 2. The damping action of the cylinders and accumulators 30, 32 is present at all times, independent of whether or not the actuator 1 is being driven to change the angle of the boom 2. In fact the accumulators also act as part of the force actuating system as the force on the piston of the cylinder is modulated by the accumulator action. In addition the combination of the actuator 1 and the boom 2 increases the fundamental frequency of oscillation of the boom 2 with its suspension system thus allowing a faster reaction of the boom 2 to a displacing force provided by actuator 1.

Other arrangements for accomplishing the objectives of the stabilisation device embodying the invention will be obvious for those skilled in the art.

While the invention has been shown and described with reference to a preferred embodiment, it will be understood by those skilled in the art that various changes or modifications in form and detail may be made without departing from the scope and spirit of this invention. For example, instead of having one spray boom, the sprayer may comprise two spray boom sections, each laterally extending from the carrying chassis in a direction substantially perpendicular to the direction of movement of the carrying chassis, each spray boom wing being provided with a damping system according to the present invention, both damping systems being controlled independently from one another. The sprayer may also comprise more than two spray boom sections.

Although in the above embodiments the boom has been described with reference to vertical movements of the actuator 1, the present invention also includes the use of similar actuators 1 which exert forces at other angles. For instance in Fig. 1 the actuator 1 may be placed so that it operates in a horizontal direction from the frame 6 to push or pull the boom 2 so that it rotates about a vertical axis passing through point 8. Tow horizontal actuators 1, each placed on one side of the point 8 can be activated to rotate the boom 2 about a vertical axis or to translate the boom in one direction. Alternatively, a horizontal actuator 1 may exert a force in the longitudinal direction of boom 2 thus causing rotation about a horizontal axis through point 8.

The movement of a horizontal actuator 1 may be controlled by a suitable control device. Sensors may provide feed back of the rotational angle of the boom 2 with respect to the forward movement direction of the frame 6. For instance, horizontally mounted distance sensors may be placed between frame 6 and the boom 2 to determine how much the boom 2 has rotated in a horizontal plane about a vertical axis through point 8. This form of rotation (in a horizontal plane) is important as horizontal swinging motions have a marked effect on the spray density on the ground. The present invention also includes actuators 1 in both the horizontal and vertical directions in order to control rotations about a horizontal axis (like a pendulum) as well as rotations in a horizontal plane.

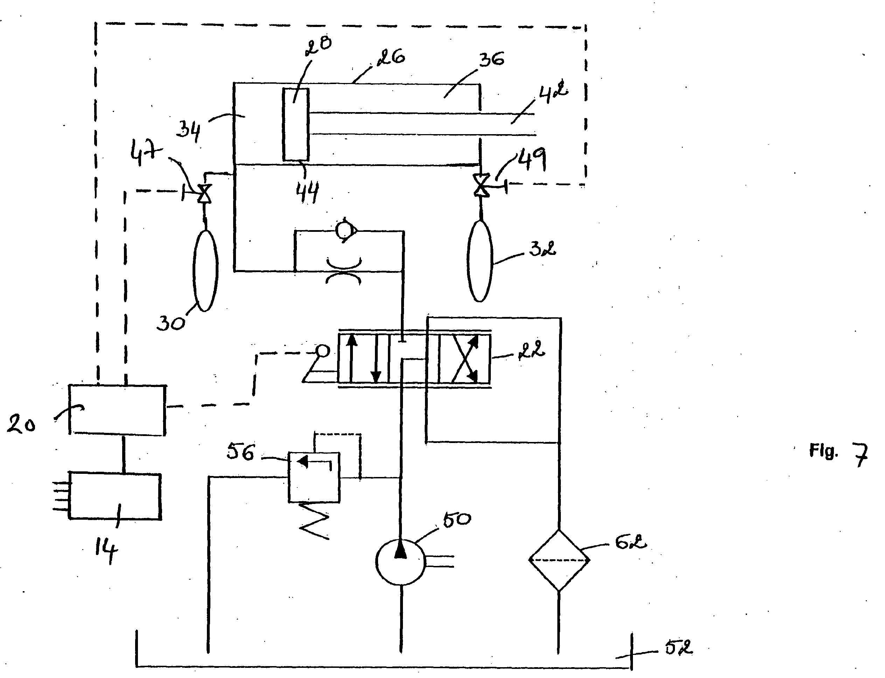

A further embodiment of the present invention is shown in Fig. 7. In this embodiment reference numerals which are the same as those in Figs. 3 and 4 refer to the same functional elements. This embodiments makes use of adjustable restrictions 47, 49 such as needle valves in order to allow adjustment of the damping characteristics of the system. This may be advantageous if the boom inertia changes for some reason, e.g. additional components or beam length. The degree of damping can be changed by increasing or decreasing the restriction to flow by adjusting the needle valves 47, 49.

The present invention also includes automatic control of the controllable restrictions 47, 49. For example the restrictions 47, 49 may be controllable valves such as electrically or hydraulically operated needle valves. The degree of closing or opening of these valves may be controlled from the computing device 14 via the control unit 20. For instance, computing device 14 may have pre-defined settings for the valves 47, 49 which may be set by an appropriate menu.

Alternatively, the degree of closing or opening of the valves 47, 49 may be determined dynamically. If position sensors on the boom 2 feed signals to the computing device 14 which indicate that the boom is oscillating (indicating under-damping), the computing device may instruct the valves 47, 49 to close down by a fixed amount thus increasing the degree of damping. On the other hand if the boom shows no oscillations, the computing device 14 may instruct control unit 20 to open valves 47, 49 until some oscillations start.

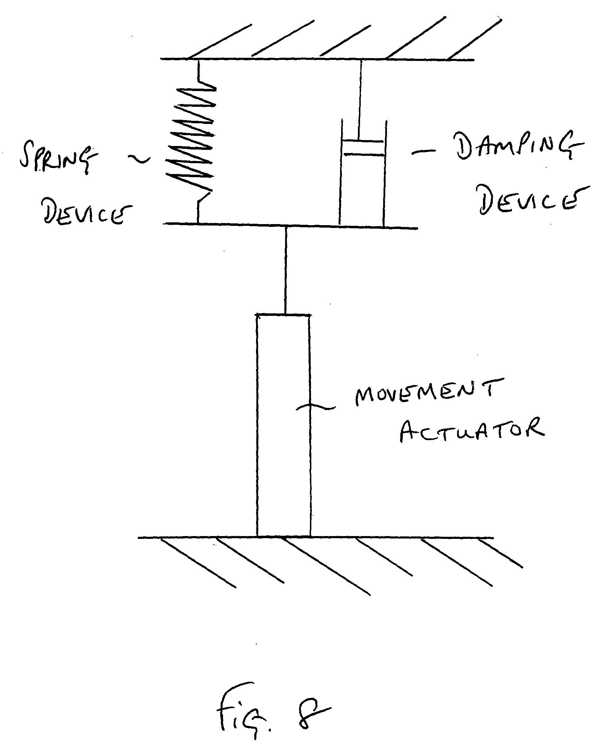

In the above the force actuator 1 has been described with reference to hydraulic or pneumatic movement actuators and damping devices. An equivalent circuit of such a device is shown in Fig. 8, in which a movement actuator is placed in series with a combination of a spring device with a damping element in parallel. For instance, in accordance with embodiments of the present invention, the spring device may be a mechanical spring, the damping unit may be a hydraulic damper as used in automobiles and the movement actuator may be an electrical, hydraulic or pneumatic actuator.

**Claims**

1. Stabilisation device for changing the position of a suspended elongate movable member (2) suspended from a suspension device (6), said stabilisation device comprising:
   a force actuator (1) mounted between the elongate movable member (2) and the suspension device (6), and adapted for exerting a force on the elongate movable member (2) for modifying its position, the force actuator comprising a movement actuator in series with a elastic spring device and a damping element.

2. The stabilisation device according to claim 1, wherein the force actuator comprises a cylinder (26) with a piston (28), and a first accumulator (30, 32) connected fluidly and directly with the cylinder (26) to provide fluid damping of the movements of the piston in the cylinder.

3. The stabilisation device according to claim 1 or 2, further comprising at least one measurement means (10) for measuring the instantaneous position of the movable member (2) with respect to a physical reference (12) independent of the device,

4. The stabilisation device according to claim 3, further comprising a comparator (14) for receiving the output from the measurement means (10) and for comparing the output with a set value corresponding to a desired inclination of the elongate movable member (2), and for emitting an error signal in accordance with this comparison.

5. The stabilisation device according to claim 4, further comprising a control device (22) responsive to the error signal emitted by the comparator (14) to actuate, as a function of said signal, the force actuator (1).

6. The stabilisation device according to any of claims 2 to 5, further comprising a fluid restriction (46; 48) between the first accumulator (30; 32) and the cylinder (26).

7. The stabilisation device according to claim 5 or 6, wherein the control device comprises a proportional valve (22).

8. The stabilisation device according to any previous claim wherein the combination of the actuator (1) and the suspended elongate movable member (2) has a higher fundamental resonant frequency than the suspended elongate movable member alone.

9.  Stabilisation device for changing the position of a suspended elongate movable member (2) suspended from a suspension device (6), said stabilisation device comprising:

    an actuator (1) mounted between the elongate movable member (2) and the suspension device (6), and adapted for exerting a force on the elongate movable member (2) for modifying its position, and for damping rotational movements of the elongate movable member about the suspension device, such that the fundamental resonant frequency of the suspended and stabilised movable member (2) is increased compared to the fundamental resonant frequency of the suspended unstabilised movable member (2).

10. The stabilisation device according to any previous claim, wherein the actuator (1) is adapted to move the elongate member in a vertical and/or horizontal direction, the vertical direction being the direction of suspension.

11. Process of stabilisation of an elongate movable member (2) suspended from a suspension device (6), comprising the steps of:

    exerting a force between the movable member (2) and the suspension device (6) to actively change the position of the elongate movable member (2), while elastically damping movement of the elongate movable member (2), such that the fundamental resonant frequency of the suspended and stabilised movable member (2) is increased compared to the fundamental resonant frequency of the suspended but unstabilised movable member (2).

Fig. 1

Fig. 2

EP 1 167 095 A1

Fig. 3

**Fig. 4**

Fig. 5

EP 1 167 095 A1

Fig. 6

Fig. 7

SPRING ~
DEVICE

— DAMPING
DEVICE

MOVEMENT
ACTUATOR

Fig. 8

**European Patent Office**

## EUROPEAN SEARCH REPORT

Application Number

EP 00 20 2215

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 5 348 226 A (HEINIGER RICHARD W ET AL) 20 September 1994 (1994-09-20) | 1,3-5 | B60G17/04 F16F15/027 A01M7/00 |
| A | * the whole document * | 8-11 | |
| X | WO 98 30088 A (KNIGHT BRIAN GEORGE ;TAYLOR KENNETH FREDERICK (GB)) 16 July 1998 (1998-07-16) | 1 | |
| A | * page 6, line 12 - page 8, line 23; claims; figures * | 8-10 | |
| X | FR 2 270 774 A (BERTHOUD SA) 12 December 1975 (1975-12-12) * the whole document * | 1,2,6,7 | |
| A,D | EP 0 157 592 A (NAT RES DEV) 9 October 1985 (1985-10-09) * the whole document * | 1,3-5, 7-11 | |
| A,D | US 4 522 841 A (GILLE ETIENNE ET AL) 11 June 1985 (1985-06-11) * column 3, line 47 - column 6, line 20; figures * | 1-11 | |
| | | | TECHNICAL FIELDS SEARCHED (Int.Cl.7) |
| A | GB 2 025 665 A (ALLMAN & CO LTD) 23 January 1980 (1980-01-23) | | B60G F16F A01M |
| A | PATENT ABSTRACTS OF JAPAN vol. 001, no. 115 (M-039), 30 September 1977 (1977-09-30) & JP 52 051620 A (TECH RES & DEV INST OF JAPAN DEF AGENCY), 25 April 1977 (1977-04-25) * abstract; figures 3-6 * | 1,8,9,11 | |

-/--

The present search report has been drawn up for all claims

| Place of search | Date of completion of the search | Examiner |
|---|---|---|
| THE HAGUE | 1 December 2000 | Tsitsilonis, L |

**EUROPEAN SEARCH REPORT**

Application Number

EP 00 20 2215

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | US 2 860 889 A (HANNA, C.R.) 18 November 1958 (1958-11-18) * column 6, line 44 - column 7, line 2; figures 1,4,11 * * column 8, line 50 - column 9, line 41 * --- | 1,8,9,11 | |
| A | EP 0 512 550 A (DEERE & CO) 11 November 1992 (1992-11-11) * abstract; figures * ----- | | |

TECHNICAL FIELDS
SEARCHED     (Int.Cl.7)

The present search report has been drawn up for all claims

| Place of search | Date of completion of the search | Examiner |
|---|---|---|
| THE HAGUE | 1 December 2000 | Tsitsilonis, L |

EPO FORM 1503 03.82 (P04C01)

**ANNEX TO THE EUROPEAN SEARCH REPORT
ON EUROPEAN PATENT APPLICATION NO.**          EP 00 20 2215

This annex lists the patent family members relating to the patent documents cited in the above–mentioned European search report.
The members are as contained in the European Patent Office EDP file on
The European Patent Office is in no way liable for these particulars which are merely given for the purpose of information.

01-12-2000

| Patent document cited in search report | | Publication date | Patent family member(s) | | Publication date |
|---|---|---|---|---|---|
| US 5348226 | A | 20-09-1994 | NONE | | |
| WO 9830088 | A | 16-07-1998 | AU | 5568698 A | 03-08-1998 |
| | | | BR | 9806891 A | 16-05-2000 |
| | | | EP | 0951215 A | 27-10-1999 |
| | | | PL | 334442 A | 28-02-2000 |
| FR 2270774 | A | 12-12-1975 | NONE | | |
| EP 0157592 | A | 09-10-1985 | AU | 589894 B | 26-10-1989 |
| | | | AU | 4045685 A | 03-10-1985 |
| | | | DE | 3585926 A | 04-06-1992 |
| | | | DK | 136285 A | 28-09-1985 |
| | | | GB | 2156193 A,B | 09-10-1985 |
| | | | NZ | 211556 A | 20-02-1987 |
| US 4522841 | A | 11-06-1985 | FR | 2514525 A | 15-04-1983 |
| | | | AT | 35763 T | 15-08-1988 |
| | | | DE | 3278777 D | 25-08-1988 |
| | | | DK | 447582 A,B, | 10-04-1983 |
| | | | EP | 0077270 A | 20-04-1983 |
| | | | ES | 516366 D | 16-08-1983 |
| | | | ES | 8308099 A | 01-11-1983 |
| GB 2025665 | A | 23-01-1980 | NONE | | |
| JP 52051620 | A | 25-04-1977 | NONE | | |
| US 2860889 | A | 18-11-1958 | DE | 1123926 B | |
| | | | DE | 1187937 B | |
| | | | FR | 1197062 A | 27-11-1959 |
| | | | FR | 1217000 A | 29-04-1960 |
| | | | GB | 833110 A | |
| | | | GB | 863563 A | |
| | | | US | 2965390 A | 20-12-1960 |
| | | | US | 2976052 A | 21-03-1961 |
| | | | US | 3013810 A | 19-12-1961 |
| EP 0512550 | A | 11-11-1992 | DE | 4115311 A | 12-11-1992 |
| | | | AT | 128917 T | 15-10-1995 |
| | | | DE | 59203949 D | 16-11-1995 |

EPO FORM P0459